# EUROPÄISCHE PATENTSCHRIFT

(11) **EP 2 846 126 B1**
(45) Veröffentlichungstag und Bekanntmachung des Hinweises auf die Patenterteilung: **16.09.2015**
(21) Anmeldenummer: 13183033.3
(22) Anmeldetag: 04.09.2013
(51) Int. Cl.: G01B 5/24, G01D 13/16

(54) **Messvorrichtung und Verfahren zum Messen der Position von Körpern**
Measuring device and a method for measuring the position of bodies
Dispositif de mesure et procédé de mesure de la position de corps

(43) Veröffentlichungstag der Anmeldung: 11.03.2015
(73) Patentinhaber: Bogen Electronic GmbH, 14163 Berlin (DE)
(72) Erfinder: Hoyer, Jörn, 14797 Großbeeren (DE); Becker, Torsten, 14109 Berlin (DE)
(74) Vertreter: Elbel, Michaela

(56) Entgegenhaltungen:
- EP-A1- 2 385 353
- EP-A2- 2 302 331
- DE-A1- 10 222 502
- DE-A1-102006 060 622

## Beschreibung

Die Erfindung betrifft eine Messvorrichtung und ein Verfahren zum Messen der Position eines ersten Körpers zu einem zum ersten Körper benachbarten und relativ dazu bewegbaren zweiten Körper.

Im Werkzeugmaschinenbau ist es bekannt beispielsweise einen magnetischen Linearmaßstab zur Bestimmung einer Position eines Werkzeugschlittens zu verwenden. Die Positionen können mit einer Relativmessung oder einer Absolutmessung bestimmt werden. Für die relative Positionsbestimmung wird ein ununterscheidbares Bitmuster abwechselnder gleichlanger Nord- und Südpole vermessen. Da die einzelnen Bits aber nicht unterscheidbar sind, sind Positionen nur relativ unterscheidbar und die Position wird in der Regel durch Zählen der passierten Bits erzeugt. Für die absolute Positionsbestimmung wird entweder das Bitmuster durch eine zweite Spur indiziert oder es wird ein unterscheidbares Bitmuster verwendet. Im ersten Fall werden durch eine weitere Spur die einzelnen Bits indiziert und somit unterscheidbar gemacht. Im zweiten Fall werden beispielhaft unterscheidbare Bitmuster verwendet, bei denen die einzelnen Maßstabsinkremente unterschiedlich breit sind, beispielsweise von einem absoluten Startpunkt aus sich vergrößern. Es ist jedoch zwingend erforderlich, dass die jeweiligen Breiten der Maßstabsinkremente nur einmal vorkommen, damit die Erkennung der absoluten Position eindeutig ist. Hierbei wird jedoch nachteilig die maximale Messstrecke durch die Möglichkeit begrenzt, die lokale Länge der einzelnen Breiten zu messen und seiner absoluten Position zu zuordnen.

Aufgabe der Erfindung ist es, eine Messvorrichtung und ein Verfahren zum Messen der Position eines ersten Körpers zu einem zum ersten Körper benachbarten und relativ dazu bewegbaren zweiten Körper zu schaffen, wobei der Streckenbereich, innerhalb dessen die Position liegen kann, groß ist.

Die Aufgabe wird gelöst mit den Merkmalen der unabhängigen Patentansprüche. Bevorzugte Ausgestaltungen dazu sind in den weiteren Patentansprüchen angegeben.

Die erfindungsgemäße Messvorrichtung zum Messen der Position eines ersten Körpers zu einem zum ersten Körper benachbarten und relativ dazu bewegbaren zweiten Körper weist ein an dem ersten Körper befestigbares und eine Markierung aufweisendes Maßstabsband und zwei an dem zweiten Körper befestigbare Markierungsdetektionssensoren auf, wobei die Markierung von einem Muster aus Markierungsstreifen gebildet ist, deren Übergänge zwischen einer ersten Position des Maßstabsbands und einer in die Längsrichtung des Maßstabsbands im Abstand zur ersten Position angeordneten zweiten Position jeweils derart in einem jeweiligen Neigungswinkel geneigt angeordnet sind, dass jeder der Neigungswinkel einen Wert hat, der sich von den Werten der anderen Neigungswinkeln unterscheidet, wobei das Maßstabsband in zwei Spuren in Transversalrichtung, wobei einer der Markierungsdetektionssensoren benachbart zur ersten Spur und der andere der Markierungsdetektionssensoren benachbart zur zweiten Spur angeordnet ist sowie die Markierungsdetektionssensoren in die Transversalrichtung des Maßstabsbands gesehen nebeneinander zwischen der ersten Position und der zweiten Position angeordnet sind, so dass mit dem Detektieren der Neigungswinkel die Position des ersten Körpers zum zweiten Körper innerhalb der ersten und der zweiten Position bestimmbar ist.

Da die beiden Spuren nebeneinander angeordnet sind, sind die Markierungsdetektionssensoren vorteilhaft in der Transversalrichtung des Maßstabsbands ebenfalls nebeneinander angeordnet, wodurch der vollständige Bereich zwischen der ersten Position und der zweiten Position von den Markierungsdetektionssensoren erfassbar ist. Somit kann die Position des ersten Körpers zum zweiten Körper an einer beliebigen Stelle zwischen der ersten Position und der zweiten Position liegen. Etwa ein Versatz der Markierungsdetektionssensoren in Längsrichtung des Maßstabsbands braucht nicht vorgesehen zu werden, der nachteilig zu einer Verkürzung der Messstrecke zwischen der ersten Position und der zweiten Position führen würde.

Die Markierungsstreifenübergänge erstrecken sich stufenfrei von der ersten Spur zur zweiten Spur, wobei sie durch ihre Neigungswinkel eindeutig lokal zuordenbar sind. Dadurch ist vorteilhaft mit der erfindungsgemäßen Messvorrichtung eine exakte Bestimmung der Position der beiden Körper zueinander innerhalb der von der ersten Position und der zweiten Position definierten Messstrecke erzielt.

Das Maßstabsband ist bevorzugt diesseits seiner Mitte in die erste Spur und jenseits seiner Mitte in die zweite Spur aufgeteilt. Die Markierungsstreifen sind bevorzugtermaßen trapezförmig geformt. Für das Muster ist es bevorzugt, dass es alternierend ist oder aus einem zufälligen Wechsel von Eigenschaften entsteht. Bevorzugt ist es, dass die Markierungsstreifen von Einfärbungen der Oberfläche des Maßstabsbands gebildet und die Markierungsdetektionssensoren optische Sensoren oder Kameras sind. Hierbei ist es bevorzugt, dass die Markierungsstreifen ein Hell-Dunkel-Streifenmuster bilden, beispielsweise ein Weiß-Schwarz-Streifenmuster. Alternativ ist es bevorzugt, dass die Markierungen durch Weiß-Schwarz-Weiß-Muster gebildet werden. Alternativ ist es bevorzugt, dass die Markierungsstreifen von permanentmagnetischen Polen des Maßstabsbands gebildet und die Markierungsdetektionssensoren Magnetsensoren sind. Hierbei ist es bevorzugt, dass die Magnetsensoren magnetoresistive Sensoren oder Hall-Sensoren sind.

Beim Bestimmen der Position des ersten Körpers zum zweiten Körper innerhalb der ersten und der zweiten Position werden die detektierten Neigungswinkel bevorzugt dahingehend ausgewertet, dass ein Phasenversatz oder die Polarität der Signale der Markierungsdetektionssensoren ermittelt wird.

Bevorzugt ist es, dass diejenigen Markierungsstreifenübergänge an der ersten und der zweiten Position jeweils einen Minimalwinkel als ihren Neigungswinkel haben sowie zwischen den beiden Positionen an einer dritten Position des Maßstabsbands einer der Markierungsstreifenübergänge angeordnet ist, der in einem Maximalwinkel zur Transversalrichtung des Maßstabs geneigt angeordnet ist, wobei die Neigungswinkel der Markierungsstreifenübergänge, die zwischen der ersten Position und der dritten Position und die zwischen der zweiten Position und der dritten Position angeordnet sind, in Richtung zur dritten Position hin monoton vom Minimalwinkel zum Maximalwinkel zunehmen. Hierbei ist es bevorzugt, dass die Markierungsstreifen in die Longitudinalrichtung des Maßstabsbands gesehen in der Mitte des Maßstabsbands jeweils dieselbe Breite haben. Ferner ist es bevorzugt, dass der Minimalwinkel 0° beträgt. Der Maximalwinkel beträgt bevorzugtermaßen 90°, insbesondere 60°.

Die Anzahl der Markierungsstreifenübergänge von einem der Markierungsstreifen auf den benachbarten Markierungsstreifen zwischen der ersten Position und der dritten Position und die Anzahl der Markierungsstreifenübergänge von einem der Markierungsstreifen auf den benachbarten Markierungsstreifen zwischen der zweiten Position und der dritten Position sind bevorzugtermaßen gleich groß. Außerdem nehmen bevorzugtermaßen die Neigungswinkel der Markierungsstreifen, die zwischen der ersten Position und der dritten Position und die zwischen der zweiten Position und der dritten Position angeordnet sind, in Richtung zur dritten Position hin streng monoton vom Minimalwinkel zum Maximalwinkel zu.

Ist bevorzugtermaßen das Maßstabsband mit den magnetischen Markierungsstreifen versehen, so wird beim Herstellen des Maßstabsbands ein Schreibwerkzeug bei der Magnetisierung entlang des Maßstabsbands mit konstanter Translationsgeschwindigkeit bewegt und dabei beispielsweise um die Mitte des Maßstabsbands verschwenkt, wodurch die nebeneinanderliegenden und zueinander geneigt sowie trapezförmig ausgebildeten Markierungsstreifen ausgebildet werden. Dabei wird das Schreibwerkzeug in gleichen Zeitintervallen umgepolt, so dass die Breiten der Markierungsstreifen zu den Rändern des Maßstabsbands hin geometrisch gestreckt bzw. gestaucht sind. Ist beispielsweise das Maßstabsband 10 mm breit, so kann mit einem Schreibwerkzeug von 20 mm Breite ein Maximalwinkel von bis zu 60° erreicht werden. Bei der Herstellung des Maßstabsbands ist also das Schreibwerkzeug ausgehend von dem Minimalwinkel von 0° auf den Maximalwinkel von 60° zu drehen und dann wieder auf den Minimalwinkel von 0° zurückzudrehen. Dadurch kann vorteilhaft die Herstellung der beiden Spuren in nur einem einzigen Arbeitsschritt bewerkstelligt werden. Außerdem kann vorteilhaft zwischen der ersten Position und der zweiten Position eine volle Modulationswellenlänge der Markierungsstreifen liegen, da von den beiden Markierungsdetektionssensoren gleichzeitig zwei Informationen in Form der lokal vorliegenden Neigungswinkel der Markierungsstreifenübergänge vorliegen.

Das erfindungsgemäße Verfahren zum Messen der Position des ersten Körpers zum zweiten Körper weist die Schritte auf: Bereitstellen der erfindungsgemäßen Messvorrichtung; Erfassen der Amplitude der Signale der Markierungsdetektionssensoren; Ermitteln der Position der Körper zueinander innerhalb der ersten Position und der zweiten Position anhand der von den Markierungsdetektionssensoren detektierten Neigungswinkeln.

Außerdem ist es bevorzugt, dass zum Ermitteln der Position der Körper zueinander innerhalb der ersten Position und der zweiten Position die Gradienten der Neigungswinkel berücksichtigt werden.

Im Folgenden wird eine bevorzugte Ausführungsform der erfindungsgemäßen Messvorrichtung anhand der beigefügten schematischen Zeichnungen erläutert. Es zeigen:
Figur 1 eine Draufsicht der bevorzugten Ausführungsform der erfindungsgemäßen Messvorrichtung und
Figur 2 eine Detailansicht aus Figur 1.

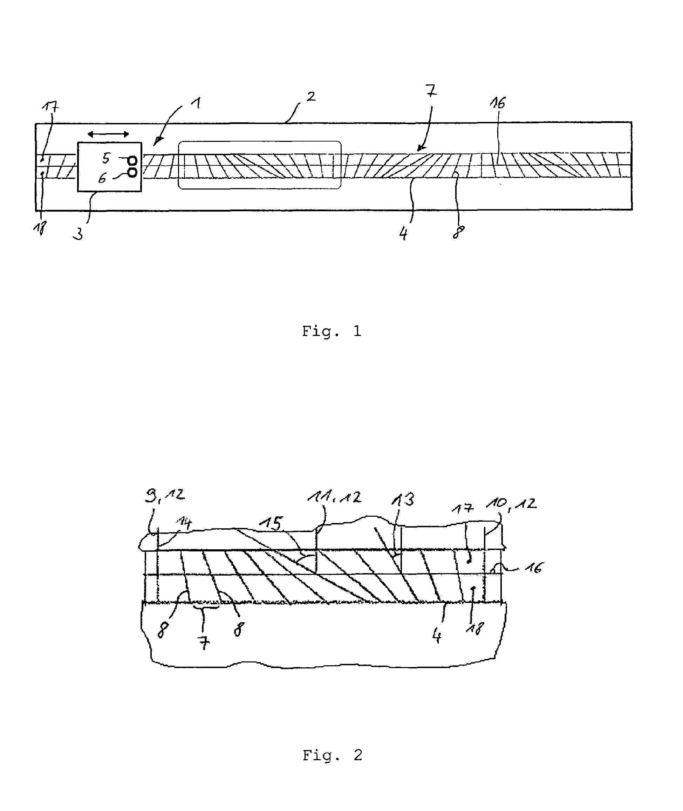

Wie es aus Figuren 1 und 2 ersichtlich ist, ist eine Messvorrichtung 1 vorgesehen, um die Position eines ersten Körpers 2 zu einem zweiten Körper 3 zu messen. Der erste Körper 2 ist beispielhaft als eine Schiene ausgebildet wohingegen der zweite Körper 3 beispielhaft als ein Schlitten ausgebildet ist. Der zweite Körper 3 ist relativ zum ersten Körper 2 bewegbar, wobei die absolute Position des zweiten Körpers 3 zum ersten Körper 2 mit der Messvorrichtung 1 bestimmbar ist.

Die Messvorrichtung 1 weist ein Maßstabsband 4 auf, das auf den ersten Körper 2 aufgebracht ist. Es ist denkbar, dass das Maßstabsband 4 als ein separates Band auf dem ersten Körper 2 liegt. Das Maßstabsband 4 könnte auch direkt auf der Oberfläche des ersten Körpers 2 ausgebildet sein. Es ist denkbar, dass der erste Körper 2 als eine Walze ausgebildet ist, wobei das Maßstabsband 4 zyklisch geschlossen ist. Ferner weist der zweite Körper 3 einen ersten Markierungsdetektionssensor 5 und einen zweiten Markierungsdetektionssensor 6 auf, wobei der zweite Körper 3 relativ zum ersten Körper 2 so bewegt werden soll, dass die Markierungsdetektionssensoren 5, 6 entlang des Maßstabsbands 4 bewegt werden. Die Markierungsdetektionssensoren 5, 6 sind magnetoresistive Sensoren oder Hall-Sensoren.

Das Maßstabsband 4 ist aus einem ferromagnetischen Material mit hoher Energiedichte oder einem hartmagnetischen Material hergestellt. Bei der Magnetisierung des Maßstabsbands 4 wurde ein Magnetisierungskopf, der quer zum Maßstabsband 4 ausgerichtet ist, über dieses Verfahren, wobei der Magnetisierungskopf wechselseitig um die Transversalrichtung des Maßstabsbands 4 verschwenkt wurde. Dadurch wurde das Maßstabsband 4 mit einer Mehrzahl an Markierungsstreifen 7 versehen, wobei jeder Markierungsstreifen 7 entweder von einem Nordpol oder einem Südpol gebildet ist. Die Markierungsstreifen 7 sind wechselseitig mit Nord- und Südpolen magnetisiert, so dass von Markierungsstreifen zu Markierungsstreifen Übergänge 8 in Form von Polübergängen ausgebildet sind. Denkbar wäre auch, dass das Maßstabsband 4 durch eine direkte Magnetisierung der Oberfläche des ersten Körpers 2 ausgebildet ist, wobei der erste Körper 2 entsprechend ein magnetisierbares Material aufweist.

Auf dem Maßstabsband 4 ist eine erste Position 9 und im Längsabstand des Maßstabsbands 4 eine zweite Position 10 definiert. Mittig zwischen der ersten Position 9 und der zweiten Position 10 ist eine dritte Position 11 angesiedelt. Die Transversalrichtung 12 ist in der Ebene, in der das Maßstabsbands 4 liegt, normal zum Maßstabsband 4 definiert. Jeder der Übergänge 8 hat einen Neigungswinkel 13 zur Transversalrichtung 12. Auf der ersten Position 9 ist einer der Übergänge 8 angesiedelt, dessen Neigungswinkel 13 0° ist. Auf der zweiten Position 10 ist ein anderer der Übergänge 8 angesiedelt, dessen Neigungswinkel auch 0° ist. Die Übergänge 8, die zwischen der ersten Position 9 und der zweiten Position 10 angeordnet sind, haben Neigungswinkel, die größer als die Neigungswinkel der Übergänge 8 in der ersten Position 9 und der zweiten Position 10 sind, so dass die Übergänge 8 in der ersten Position 9 und der zweiten Position 10 einen Minimalwinkel 14 von 0° haben. Zwischen der ersten Position 9 und der zweiten Position 10 sind eine Mehrzahl an den Übergängen 8 angeordnet, wobei die Neigungswinkel 13 der Übergänge 8 von der ersten Position 9 zur dritten Position 11 hin zunimmt und von der dritten Position 11 zur zweiten Position 10 hin wieder abnimmt. Auf der dritten Position 11 ist derjenige der Übergänge 8 angesiedelt, dessen Neigungswinkel 13 am größten ist, so dass dieser Neigungswinkel ein Maximalwinkel 15 ist. Der Maximalwinkel 15 beträgt 60°.

In der Mitte 16 des Maßstabsbands 4 sind die Longitudinalabstände zwischen den Übergängen 8 jeweils gleich groß. In Figuren 1 und 2 gesehen oberhalb der Mitte 16 ist eine erste Spur 17 und unterhalb der Mitte eine zweite Spur 18 definiert. Somit liegen in der ersten Spur 17 die oberen Hälften der Übergänge 8, wohingegen in der zweiten Spur 18 die unteren Hälften der Übergänge 8 liegen. Die Markierungsdetektionssensoren 5, 6 sind auf dem zweiten Körper 3 in Transversalrichtung 12 nebeneinanderliegend angeordnet, wobei der erste Markierungsdetektionssensor 5 unmittelbar benachbart zur ersten Spur 17 und senkrecht zur Zeichenebene der Figur 1 oberhalb des Maßstabsbands 4 angeordnet ist. In analoger Weise ist der zweite Markierungsdetektionssensor 6 unmittelbar benachbart zur zweiten Spur 18 senkrecht zur Zeichenebene der Figur 1 oberhalb des Maßstabsbands 4 angeordnet. Bei einer relativen Bewegung des zweiten Körpers 3 zum ersten Körper 2, die mit einem Pfeil in Figur 1 angedeutet ist, werden die Markierungsdetektionssensoren 5, 6 über dem Maßstabsband 4 verfahren, wobei der Markierungsdetektionssensor 5 der ersten Spur 17 und der zweite Markierungsdetektionssensor 6 der zweiten Spur 18 folgt.

Sind die Markierungsdetektionssensoren 5, 6 zwischen der ersten Position 9 und der zweiten Position 10 angeordnet, so erfassen die Markierungsdetektionssensoren 5, 6 den Neigungswinkel 13 der entsprechenden Übergänge die unmittelbar benachbart zu den jeweiligen Markierungsdetektionssensoren 5, 6 angeordnet sind. Mit Hilfe der vorgegebenen Verteilung der Neigungswinkel 13 zwischen der ersten Position 9 und der zweiten Position 10 und der von den Markierungsdetektionssensoren detektierten Neigungswinkeln der unmittelbar benachbarten Übergänge 8 bzw. der Gradienten der Neigungswinkel ist die absolute Position des zweiten Körpers 3 eindeutig ermittelbar.

Dadurch, dass die Markierungsdetektionssensoren 5, 6 in die Transversalrichtung 12 gesehen hintereinander und in die Longitudinalrichtung des Maßstabsbands 4 gesehen nebeneinander angeordnet sind, sind beide Markierungsdetektionssensoren 5, 6 bis zur ersten Position 9 und zur zweiten Position hin verfahrbar, wobei alle zwischen der ersten Position 9 und der zweiten Position 10 sich befindenden Übergänge 8 von den Markierungsdetektionssensoren 5, 6 erfassbar sind und somit jede Position des zweiten Körpers 3 zwischen der ersten Position 9 und der zweiten Position 10 ermittelbar ist. Etwaige Überstände des Maßstabsbands 4 über die erste Position 9 bzw. der zweiten Position 10 hinaus brauchen vorgesehen zu werden.

### Bezugszeichenliste

- 1: Messvorrichtung
- 2: erster Körper
- 3: zweiter Körper
- 4: Maßstabsband
- 5: erster Markierungsdetektionssensor
- 6: zweiter Markierungsdetektionssensor
- 7: Markierungsstreifen
- 8: Übergange
- 9: erste Position
- 10: zweite Position
- 11: dritte Position
- 12: Transversalrichtung
- 13: Neigungswinkel
- 14: Minimalwinkel
- 15: Maximalwinkel
- 16: Mitte des Maßstabsbands
- 17: erste Spur
- 18: zweite Spur

## Patentansprüche

1. Messvorrichtung (1) zum Messen der Position eines ersten Körpers (2) zu einem zum ersten Körper (2) benachbarten und relativ dazu bewegbaren zweiten Körper (3), mit einem an dem ersten Körper (2) befestigbaren und eine Markierung aufweisenden Maßstabsband (4) und zwei an dem zweiten Körper (3) befestigbaren Markierungsdetektionssensoren (5, 6), wobei die Markierung von einem Muster aus Markierungsstreifen (7) gebildet ist, deren Übergänge (8) von Markierungsstreifen (7) zu Markierungsstreifen (7) zwischen einer ersten Position (9) des Maßstabsbands (4) und einer in die Längsrichtung des Maßstabsbands (4) im Abstand zur ersten Position (9) angeordneten zweiten Position (10) jeweils derart vorherbestimmt zur Transversalrichtung (12) des Maßstabsbands (7) in einem jeweiligen Neigungswinkel (13) geneigt angeordnet sind, dass jeder der Neigungswinkel (13) einen Wert hat, der sich von den Werten der anderen Neigungswinkeln unterscheidet, wobei das Maßstabsband (4) in zwei Spuren (17, 18) in Transversalrichtung aufgeteilt ist, wobei einer der Markierungsdetektionssensoren (5) benachbart zur ersten Spur (17) zum Detektieren des Neigungswinkels (13) an einer Stelle der einen Hälfte einer der Markierungsstreifenübergänge (8) und der andere der Markierungsdetektionssensoren (6) benachbart zur zweiten Spur (18) zum Detektieren des Neigungswinkels (13) einer anderen Stelle einer der Markierungsstreifenübergänge (8) angeordnet ist sowie die Markierungsdetektionssensoren (5, 6) in die Transversalrichtung (12) des Maßstabsbands (4) gesehen nebeneinander zwischen der ersten Position (9) und der zweiten Position (10) angeordnet sind, so dass mit dem Detektieren der Neigungswinkel (13) die Position des ersten Körpers (2) zum zweiten Körpers (3) innerhalb der ersten und der zweiten Position (9, 10) bestimmbar ist.

2. Messvorrichtung gemäß Anspruch 1, wobei die Markierungsstreifen (7) trapezförmig geformt sind.

3. Messvorrichtung gemäß Anspruche 1 oder 2, wobei die Markierungsstreifen (7) von Einfärbungen der Oberfläche des Maßstabsbands (4) gebildet und die Markierungsdetektionssensoren (5, 6) optische Sensoren oder Kameras sind.

4. Messvorrichtung gemäß Anspruch 3, wobei die Markierungsstreifen (7) ein Hell-Dunkel-Streifenmuster bilden.

5. Messvorrichtung gemäß Anspruch 1 oder 2, wobei die Markierungsstreifen (7) von permanentmagnetischen Polen des Maßstabsbands (4) gebildet und die Markierungsdetektionssensoren (5, 6) Magnetsensoren sind.

6. Messvorrichtung gemäß Anspruch 5, wobei die Magnetsensoren magnetoresistive Sensoren oder Hall-Sensoren sind.

7. Messvorrichtung gemäß einem der Ansprüche 1 bis 6, wobei diejenigen Markierungsstreifenübergänge (8) an der ersten und der zweiten Position (9, 10) jeweils einen Minimalwinkel (14) als ihren Neigungswinkel haben sowie zwischen den beiden Positionen an einer dritten Position (11) des Maßstabsbands (4) einer der Markierungsstreifenübergänge (8) angeordnet ist, der in einem Maximalwinkel (15) zur Transversalrichtung (12) des Maßstabsbands (4) geneigt angeordnet ist, wobei die Neigungswinkel der Markierungsstreifenübergänge (8), die zwischen der ersten Position (9) und der dritten Position (11) und die zwischen der zweiten Position (10) und der dritten Position (11) angeordnet sind, in Richtung zur dritten Position (11) hin monoton vom Minimalwinkel (14) zum Maximalwinkel (15) zunehmen.

8. Messvorrichtung gemäß Anspruch 7, wobei die Markierungsstreifen (4) in die Transversalrichtung (12) des Maßstabsbands (4) gesehen in der Mitte (16) des Maßstabsbands (4) jeweils dieselbe Breite haben.

9. Messvorrichtung gemäß Anspruch 7 oder 8, wobei der Minimalwinkel (14) 0° beträgt.

10. Messvorrichtung gemäß einem der Ansprüche 7 bis 9, wobei der Maximalwinkel (15) 90°, insbesondere 60°, beträgt.

11. Messvorrichtung gemäß einem der Ansprüche 7 bis 10, wobei die Anzahl der Markierungsstreifenübergänge (8) von einem der Markierungsstreifen auf den benachbarten Markierungsstreifen zwischen der ersten Position (9) und der dritten Position (11) und die Anzahl der Markierungsstreifenübergänge (8) von einem der Markierungsstreifen auf den benachbarten Markierungsstreifen zwischen der zweiten Position (10) und der dritten Position (11) gleich groß sind.

12. Messvorrichtung gemäß einem der Ansprüche 7 bis 11, wobei die Neigungswinkel (13) der Markierungsstreifen, die zwischen der ersten Position (9) und der dritten Position (11) und die zwischen der zweiten Position (10) und der dritten Position (11) angeordnet sind, in Richtung zur dritten Position (11) hin streng monoton vom Minimalwinkel (14) zum Maximalwinkel (15) zunehmen.

13. Verfahren zum Messen der Position eines ersten Körpers (2) zu einem zum ersten Körper (2) benachbarten und relativ dazu bewegbaren zweiten Körper (3), mit den Schritten:
- Bereitstellen einer Messvorrichtung (1) gemäß einem der Ansprüche 1 bis 12 an den Körpern (2, 3);
- Erfassen der Amplitude der Signale der Markierungsdetektionssensoren (5, 6);
- Ermitteln der Position der Körper (5, 6) zueinander innerhalb der ersten Position (9) und der zweiten Position (10) anhand der von den Markierungsdetektionssensoren (5, 6) detektierten Neigungswinkeln (13).

14. Verfahren gemäß Anspruch 13, wobei zum Ermitteln der Position der Körper (2, 3) zueinander innerhalb der ersten Position (9) und der zweiten Position (10) die Gradienten der Neigungswinkel (13) berücksichtigt werden.

## Claims

1. Measuring device (1) for measuring the position of a first body (2) in relation to a second body (3), adjacent to the first body (2) and moveable in relation to the same, with a scale tape (4) affixable to the first body (2) and comprising a marking and two marking detection sensors (5, 6) affixable to the second body (3), wherein the marking is formed by a pattern of marking strips (7), the transitions (8) of which from marking strip (7) to marking strip (7) are each arranged in an inclined manner between a first position (9) of the scale tape (4) and a second position (10), located in a longitudinal direction of the measuring tape (4) at a distance from the first position (9) at a relevant incline angle (13), predetermined in relation to the transverse direction (12) of the scale tape (7) in such a way that each of the incline angles (13) has a value that differs from the values of the other incline angles, wherein the scale tape (4) is divided into two tracks (17, 18) in a transverse direction, wherein one of the marking detection sensors (5) is arranged adjacent to a first track (17) for detecting the incline angle (13) at a point along one half of one of the marking strip transitions (8), and the other one of the marking detection sensors (6) is arranged adjacent to a second track (18) for detecting the incline angle (13) of another point of one of the marking strip transitions (8), and wherein the marking detection sensors (5, 6) are arranged next to each other between the first position (9) and the second position (10), seen in the transverse direction (12) of the scale tape (4), so that the position of the first body (2) in relation to the second body (3) can be determined within the first and the second position (9, 10) by detecting the incline angles (13).

2. Measuring device according to claim 1, wherein the marking strips (7) are of a trapezoidal shape.

3. Measuring device according to claim 1 or 2, wherein the marking strips (7) are formed by dying the surface of the scale tape (4), and the marking detection sensors (5, 6) are optical sensors or cameras.

4. Measuring device according to claim 3, wherein the marking strips (7) form a light/dark stripe pattern.

5. Measuring device according to claim 1 or 2, wherein the marking strips (7) are formed by permanent-magnetic poles of the scale tape (4), and the marking detection sensors (5, 6) are magnetic sensors.

6. Measuring device according to claim 5, wherein the magnetic sensors are magneto-resistive sensors or Hall sensors.

7. Measuring device according to one of the claims 1 to 6, wherein those marking strip transitions (8) in the first and the second position (9, 10) each have a minimal angle (14) as their incline angle, and one of the marking strip transitions (8) is arranged between the two positions in a third position (11) of the scale tape (4), with the same being arranged inclined at a maximal angle (15) to the transverse direction (12) of the scale tape (4), wherein the incline angle of the marking strip transitions (8) arranged between the first position (9) and the third position (11), and those between the second position (10) and the third position (11) increase in the direction of the third position (11) monotonously from the minimal angle (14) to the maximal angle (15).

8. Measuring device according to claim 7, wherein the marking strips (4) are each of the same width in the middle (16) of the scale tape (4) when seen in a transverse direction (12) of the scale strip (4).

9. Measuring device according to claim 7 or 8, wherein the minimal angle (14) is 0°.

10. Measuring device according to one of the claims 7 to 9, wherein the maximal angle (15) is 90°, in particular 60°.

11. Measuring device according to one of the claims 7 to 10, wherein the number of marking strip transitions (8) of one of the marking strips to the adjacent marking strip between the first position (9) and the third position (11), and the number of marking strip transitions (8) of one of the marking strips to the adjacent marking strip between the second position (10) and the third position (11) are of an identical size.

12. Measuring device according to one of the claims 7 to 11, wherein the incline angle (13) of the marking strips arranged between the first position (9) and the third position (11), and those between the second position (10) and the third position (11) increase strictly monotonously from the minimal angle (14) to the maximal angle (15) in the direction of the third position (11).

13. Method for measuring the position of a first body (2) in relation to a second body (3), adjacent to the first body (2) and moveable in relation to the same, with the steps:
- providing a measuring device (1) according to one of the claims 1 to 12 on the bodies (2, 3);
- recording the amplitudes of the signals of the marking detection sensors (5, 6);
- determining the position of the bodies (5, 6) in relation to each other within the first position (9) and the second position (10) by means of the incline angles (13) detected by the marking detection sensors (5, 6).

14. Method according to claim 13, wherein the gradients of the incline angles (13) are taken into consideration when determining the position of the bodies (2, 3) in relation to each other within the first position (9) and the second position (10).

## Revendications

1. Dispositif de mesure (1) destiné à mesurer la position d'un premier corps (2) par rapport à un deuxième corps (3) adjacent au premier corps (2) et mobile par rapport à celui-ci, avec un feuillard gradué (4) fixable au premier corps (2) et présentant un marquage et deux capteurs de détection de marquage (5, 6) fixables au deuxième corps (3), dans lequel le marquage est formé par un motif constitué de bandes de marquage (7), dont les jonctions (8) des bandes de marquage (7) aux bandes de marquage (7) sont disposées inclinées entre une première position (9) du feuillard gradué (4) et une deuxième position (10) disposée dans la direction longitudinale du feuillard gradué (4) à distance de la première position (9) respectivement de manière prédéterminée par rapport à la direction transversale (12) du feuillard gradué (7) selon un angle d'inclinaison respectif (13), de telle sorte que chacun des angles d'inclinaison (13) a une valeur qui se différencie des valeurs des autres angles d'inclinaison, dans lequel le feuillard gradué (4) est divisé en deux pistes (17, 18) dans la direction transversale, dans lequel l'un des capteurs de détection de marquage (5) est disposé de manière adjacente à la première piste (17) pour détecter l'angle d'inclinaison (13) au niveau d'un point d'une moitié de l'une des jonctions de bandes de marquage (8) et l'autre capteur de détection de marquage (6) est disposé de manière adjacente à la deuxième piste (18) pour détecter l'angle d'inclinaison (13) d'un autre point de l'une des jonctions de bandes de marquage (8) et les capteurs de détection de marquage (5, 6) vus dans la direction transversale (12) du feuillard gradué (4) sont disposés les uns à côté des autres entre la première position (9) et la deuxième position (10), de sorte qu'avec la détection de l'angle d'inclinaison (13) la position du premier corps (2) par rapport au deuxième corps (3) peut être déterminée dans la première et la deuxième position (9, 10).

2. Dispositif de mesure selon la revendication 1, dans lequel les bandes de marquage (7) sont formées en trapèze.

3. Dispositif de mesure selon les revendications 1 ou 2, dans lequel les bandes de marquage (7) sont formées par des colorations de la surface du feuillard gradué (4) et les capteurs de détection de marquage (5, 6) sont des capteurs optiques ou des caméras.

4. Dispositif de mesure selon la revendication 3, dans lequel les bandes de marquage (7) forment un motif à bandes claires et foncées.

5. Dispositif de mesure selon la revendication 1 ou 2, dans lequel les bandes de marquage (7) sont formées par des pôles magnétiques permanents du feuillard gradué (4) et les capteurs de détection de marquage (5, 6) sont des capteurs magnétiques.

6. Dispositif de mesure selon la revendication 5, dans lequel les capteurs magnétiques sont des capteurs magnétorésistifs ou des capteurs à effet Hall.

7. Dispositif de mesure selon l'une des revendications 1 à 6, dans lequel les jonctions de bandes de marquage (8) au niveau de la première et de la deuxième position (9, 10) ont respectivement un angle minimal (14) qui leur sert d'angle d'inclinaison et entre les deux positions au niveau d'une troisième position (11) du feuillard gradué (4) est disposée l'une des jonctions de bandes de marquage (8), qui est disposée inclinée selon un angle maximal (15) par rapport à la direction transversale (12) du feuillard gradué (4), dans lequel les angles d'inclinaison des jonctions de bandes de marquage (8), qui sont disposées entre la première position (9) et la troisième position (11) et entre la deuxième position (10) et la troisième position (11), augmentent dans la direction de la troisième position (11) de manière monotone de l'angle minimal (14) à l'angle maximal (15).

8. Dispositif de mesure selon la revendication 7, dans lequel les bandes de marquage (4) ont respectivement la même largeur vues dans la direction transversale (12) du feuillard gradué (4) au milieu (16) du feuillard gradué (4).

9. Dispositif de mesure selon la revendication 7 ou 8, dans lequel l'angle minimal (14) est de 0°.

10. Dispositif de mesure selon l'une des revendications 7 à 9, dans lequel l'angle maximal (15) est de 90°, en particulier de 60°.

11. Dispositif de mesure selon l'une des revendications 7 à 10, dans lequel le nombre de jonctions de bandes de marquage (8) de l'une des bandes de marquage aux bandes de marquage adjacentes entre la première position (9) et la troisième position (11) et le nombre de jonctions de bandes de marquage (8) de l'une des bandes de marquage aux bandes de marquage adjacentes entre la deuxième position (10) et la troisième position (11) sont identiques.

12. Dispositif de mesure selon l'une des revendications 7 à 11, dans lequel les angles d'inclinaison (13) des bandes de marquage, qui sont disposées entre la première position (9) et la troisième position (11) et entre la deuxième position (10) et la troisième position (11), augmentent de manière fortement monotone dans la direction de la troisième position (11) de l'angle minimal (14) à l'angle maximal (15).

13. Procédé destiné à mesurer la position d'un premier corps (2) par rapport à un deuxième corps (3) adjacent au premier corps (2) et mobile par rapport à celui-ci, comportant les étapes consistant à :
- mettre à disposition un dispositif de mesure (1) selon l'une des revendications 1 à 12 au niveau des corps (2, 3) ;
- acquérir l'amplitude des signaux des capteurs de détection de marquage (5, 6) ;
- déterminer la position des corps (5, 6) l'un par rapport à l'autre dans la première position (9) et la deuxième position (10) à l'aide des angles d'inclinaison (13) détectés par les capteurs de détection de marquage (5, 6).

14. Procédé selon la revendication 13, dans lequel pour déterminer la position des corps (2, 3) l'un par rapport à l'autre dans la première position (9) et la deuxième position (10) les gradients des angles d'inclinaison (13) sont pris en compte.
